# FASCICULE DE BREVET EUROPEEN

(11) **EP 0 559 522 B1**
(45) Date de publication et mention de la délivrance du brevet: **03.07.1996**
(21) Numéro de dépôt: 93400467.2
(22) Date de dépôt: 24.02.1993
(51) Int. Cl.: A01B 49/06

(54) **Outil agricole combiné constitué par l'association d'une herse et d'un semoir**
Landwirtschaftliche Gerätekombination von einer Egge mit einer Sämaschine
Combined agricultural machine consisting of a seeder coupled to a barrow

(30) Priorité: 28.02.1992 FR 9202335
(43) Date de publication de la demande: 08.09.1993
(73) Titulaire: LELY FRANCE, F-61004 Alencon Cédex (FR)
(72) Inventeur: Damonneville, François, F-61250 Damigni (FR)
(74) Mandataire: Loyer, Bertrand

(56) Documents cités:
- EP-A- 0 201 048
- EP-A- 0 445 583
- FR-A- 2 499 814
- FR-A- 2 533 408
- FR-A- 2 549 340

## Description

La présente invention a pour objet un outil agricole combiné constitué par l'association d'une herse et d'un semoir.

Il est courant d'associer un semoir et une herse en faisant tracter le semoir par le châssis de la herse. Dans certains cas la herse est munie, à l'arrière de son châssis de moyens d'accouplement du type attelage trois points et le semoir y est attelé : cette disposition présente l'inconvénient d'allonger considérablement l'ensemble vers l'arrière, de sorte que, au moment du levage de l'ensemble en fin de rangée, le porte-à-faux est considérable même lorsque l'on prévoit le relevage du semoir au-dessus de l'arrière de la herse. Il en résulte que seuls des tracteurs très puissants peuvent employer ce genre d'outil. Mais les tracteurs très puissants sont non seulement très onéreux, ils sont très lourds et tassent trop la terre, ce qui a une influence néfaste sur la levée du semis.

Une telle disposition est par exemple décrite dans les documents français 2 499 814, 2 533 408 et 2 549 340 qui montrent les caractéristiques du préambule de la revendication 1.

Pour éviter cela, il a été proposé dans le modèle d'utilité allemand N° 90 02700 de fixer directement le semoir sur le châssis de la herse. Par cette disposition, l'on réduit le porte-à-faux mais, il n'est pas possible de prévoir un mécanisme de distribution entraîné par un mécanisme roulant sur le sol. Il faut alors entraîner ce mécanisme de distribution par un arbre de prise de force. Lorsque la herse est une herse animée par la prise de force du tracteur comme c'est le cas pour une herse alternative ou une herse rotative, il faut donc que cette herse comporte des moyens permettant la mise en oeuvre d'un deuxième arbre de prise de force ; or toutes les herses n'en sont pas équipées et sur celles qui en sont équipées, ce dispositif est disposé tout à l'arrière du châssis de la herse de sorte que le semoir ne peut être placé qu'en arrière et on retrouve le problème du porte-à-faux.

On a également essayé de disposer le semoir de façon que les goulottes de distribution des graines soient situées entre les organes de travail du sol de la herse et le rouleau, mais cela oblige à déplacer le rouleau vers l'arrière ce qui nuit à l'effet de coopération entre les organes de travail du sol et le rouleau et augmente le porte-à-faux du rouleau qui est très lourd.

Pour pallier ces difficultés, la présente invention concerne un outil agricole combiné constitué par l'association d'une herse comportant un châssis portant une tête d'attelage, une ou plusieurs rangées d'organes de travail du sol et des moyens porteurs d'un rouleau et d'un semoir articulé au châssis de la herse de façon à pouvoir être relevé, caractérisé par le fait que le châssis du semoir est porté, en position de travail, par les moyens porteurs du rouleau de façon à être situé au-dessus de celui-ci, le semoir ne comportant pas de roues pour le supporter sur le sol et par le fait que le dispositif est agencé pour que ledit semoir puisse être, lors de son relevage, ramené à l'avant de la herse, au-dessus des organes de travail de celle-ci.

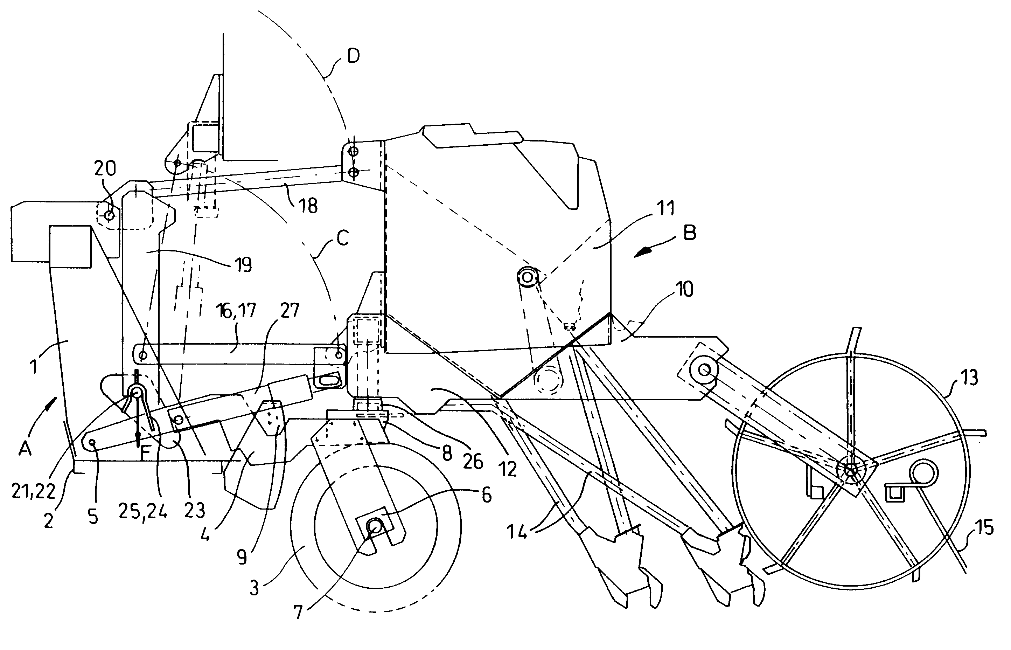

A titre d'exemple non limitatif et pour faciliter la compréhension de l'invention, on a représenté à la figure unique annexée une vue schématique en élévation latérale d'un exemple de réalisation de l'invention.

Dans cet exemple, les organes de travail du sol de la herse ne sont pas représentés parce que l'invention n'est pas limitée à un cas particulier de herse : celle-ci peut comporter des dents fixes ou des dents animées, la herse étant une herse alternative ou une herse rotative.

La herse, désignée par la référence générale A, comporte un châssis 2, portant d'une part les organes de travail du sol (non représentés) et les moyens porteurs du rouleau 3.

Ces moyens peuvent être deux bras parallèles 4, articulés en 5 à chaque extrémité latérale du châssis 2 et munis à leurs extrémités de paliers 6 portant l'arbre 7 du rouleau 3.

Dans l'exemple représenté, les deux bras 4 portent une traverse 8 située au-dessus du rouleau 3, de préférence à l'aplomb de l'arbre 7 dudit rouleau 3.

Comme cela est connu en soi, les bras 4 peuvent être immobilisés en toute position voulue par des moyens 9.

Le châssis 2 comporte une tête d'attelage 1 par laquelle la herse est accouplée au dispositif de levage et d'attelage trois points d'un tracteur non représenté.

Le semoir, désigné par la référence générale B, comporte un châssis 10 portant une trémie 11 pour recevoir les graines, ainsi qu'un mécanisme de distribution 12 entraîné par une ou plusieurs roues 13 qui reposent sur le sol, les graines étant déversées sur le sol par des goulottes ou analogues 14 situées derrière le rouleau 3. Des moyens 15, pour recouvrir les graines sont disposés à hauteur des moyens d'entraînement 13.

Le châssis 10 du semoir est relié par trois bielles d'attelage, les deux bielles inférieures 16 et 17 et la bielle supérieure 18 à une tête d'attelage 19.

Cette tête d'attelage 19 est reliée à la tête d'attelage 1 de la herse. De préférence, cette liaison est réalisée au moyen d'un tourillon supérieur 20 et de deux tourillons inférieurs 21, 22 portés chacun par une plaque 23 solidaire de la tête d'attelage 1 de la herse et sur lesquels s'engagent deux fers en U inversé ou cavaliers 24, 25.

Comme on le voit sur la figure, le châssis 10 du semoir repose sur la traverse 8 du bâti portant le rouleau 3 de manière à ce que le poids dudit semoir soit totalement supporté par ledit rouleau 3. A cet effet, l'appui du châssis 10 du semoir sur la traverse 8 se fait en un point situé à proximité de la trémie.

Le semoir est ainsi porté par la herse ce qui permet de ne pas prévoir de roues pour le supporter sur le sol.

Des moyens élastiques 26 sont interposés entre le châssis 10 et la traverse 8. Dans l'exemple représenté, ce sont des tampons en caoutchouc qui peuvent être soit solidaires de la traverse 8 soit solidaires du châssis 2 du semoir.

Par une telle disposition, le semoir B n'est pas rigidement lié au châssis de la herse A, il ne suit donc pas tous les soubresauts de cette dernière se produisant lorsque les organes de travail de celle-ci heurtent des pierres ou des mottes de terre très dures.

De plus, les vibrations inévitables avec les herses animées (alternatives ou rotatives) sont amorties et ne viennent pas perturber le mécanisme de distribution des graines de sorte que le semis est beaucoup plus régulier.

Un vérin 27 (qui peut être hydraulique, pneumatique, électrique ou mécanique) est interposé entre la tête d'attelage 19 du semoir et son châssis 10.

Lorsque ce vérin 27 est mis en oeuvre, les trois bielles 16, 17 et 18 pivotent vers le haut selon les courbes C et D, ce qui a pour effet que le semoir, tout en demeurant parallèle à lui-même (si les bielles 16-17 ont la même longueur que la bielle 18), est soulevé et est amené au dessus du châssis 2 de la herse A.

Le semoir est ainsi, sous l'effet de la mise en oeuvre du vérin 27, ramené à l'avant de la herse au-dessus des organes de travail de celle-ci. Il est alors dans une position très proche de l'arrière du tracteur

L'on comprendra que lorsque le semoir B est ainsi amené au-dessus de l'avant de la herse A en fin de rangée, le porte-à-faux est complètement éliminé.

A cet avantage concernant la manipulation et le relevage, s'ajoute celui du au fait que le semoir reste muni des moyens usuels 15 d'entraînement des mécanismes de distribution et d'enfouissement des graines, ce qui permet de conserver un fonctionnement simple et ne nécessitant pas d'être commandé à partir d'une prise de force du tracteur.

Un autre avantage procuré par l'invention est du au fait que le semoir B n'a pas de roues porteuses, l'on évite ainsi l'influence néfaste que ces roues ont usuellement sur le semis en roulant sur le sol.

Dans le dispositif suivant l'invention, l'accouplage et le désaccouplage du semoir 13 à la herse A est particulièrement aisé.

Il est à noter à ce sujet qu'il serait possible de supprimer la tête d'attelage 19 du semoir B et d'atteler directement les bielles 16, 17 et 18 sur la tête d'attelage 1 de la herse A. Dans ce cas, le vérin 27 doit être disposé entre le semoir B et le châssis 2 de la herse A. Une telle disposition aurait pour effet de rendre l'accouplage et le désaccouplage du semoir B à la herse A assez compliqué mais permettrait de conserver tous les autres avantages.

## Revendications

1. Outil agricole combiné constitué par l'association d'une herse (A) comportant un châssis (2) portant une tête d'attelage (1), une ou plusieurs rangées d'organes de travail du sol et des moyens porteurs d'un rouleau (3) et d'un semoir (B) articulé au châssis de la herse (A) de façon à pouvoir être relevé, caractérisé par le fait que le châssis (10) du semoir (B) est porté, en position de travail, par les moyens porteurs du rouleau (3) de façon à être situé au-dessus de celui-ci, le semoir (B) ne comportant pas de roues pour le supporter sur le sol et par le fait que le dispositif est agencé pour que ledit semoir (B) puisse être, lors de son relevage, ramené à l'avant de la herse (A), au-dessus des organes de travail de celle-ci.

2. Outil agricole selon la revendication 1 dans lequel ledit semoir (B) comporte un châssis (10) portant une trémie (11) pour les graines, un mécanisme de distribution des graines (12), un organe d'entraînement (13) dudit mécanisme et trois bielles (16, 17, 18) d'attelage, caractérisé par le fait que les trois bielles d'attelages (16, 17, 18) dudit châssis (10) du semoir (B) sont disposées de façon à pouvoir pivoter vers le haut et vers l'avant.

3. Outil agricole selon la revendication 2, dans lequel, en position de travail, le châssis (10) du semoir (B) repose sur les moyens porteurs du rouleau (3) par l'intermédiaire d'un ou plusieurs amortisseurs élastiques (26).

4. Outil agricole selon la revendication 2, dans lequel les moyens porteurs du rouleau (3) sont constitués de deux bras reliés au châssis de la herse et portant le rouleau à chacune de leurs extrémités, caractérisé en ce que ces deux bras portent une traverse (8) située au-dessus du rouleau, le châssis (10) du semoir (B) reposant sur cette traverse avec interposition d'un ou plusieurs dispositifs élastiques (26).

5. Outil agricole selon la revendication 2, dans lequel les trois bielles d'attelage (16, 17, 18) du châssis (10) du semoir (B) au châssis (2) de la herse (A) sont mises en rotation par l'intermédiaire d'un vérin (27) (hydraulique, électrique, pneumatique ou mécanique).

6. Outil agricole selon la revendication 5, dans lequel le vérin (27) devant faire pivoter vers le haut et vers l'avant les trois bielles d'attelage du châssis (10) du semoir (B) est interposé entre la tête d'attelage (19) et le châssis (10) du semoir.

7. Outil agricole selon la revendication 5, dans lequel les trois bielles (16, 17, 18) d'attelage du châssis (10) du semoir (B) à la tête d'attelage (1) de la herse (A) sont articulées directement sur cette tête d'attelage (1) sans interposition d'une tête d'attelage (19) propre au semoir.

## Claims

1. A combined agricultural implement formed by the association of a harrow (A) comprising an underframe (2) bearing a coupler head (1), one or more rows of elements for tilling the earth, and bearing means for a roller (3) and a seeder (B) articulated to the underframe of the harrow (A) so as to be able to be raised, characterised by the fact that the underframe (10) of the seeder (B) is borne, in the tilling position, by the bearing means for the roller (3) so as to be located above said roller, the seeder (B) not comprising any wheels to support it on the ground, and by the fact that the device is arranged so that said seeder (B), when it is raised, can be brought in front of the harrow (A), above the tilling elements thereof.

2. An agricultural implement according to Claim 1, in which said seeder (B) comprises a underframe (10) bearing a hopper (11) for the grains, a distributing mechanism (12) for the grains, a driving element (13) for said mechanism and three coupling connecting-rods (16, 17, 18), characterised by the fact that the three coupling connecting-rods (16, 17, 18) of said underframe (10) of the seeder (B) are arranged so as to be able to pivot upwards and forwards.

3. An agricultural implement according to Claim 2, in which, in the tilling position, the underframe (10) of the seeder (B) rests on the bearing means for the roller (3) by means of one or more elastic shock-absorbers (26).

4. An agricultural implement according to Claim 2, in which the bearing means for the roller (3) are formed by two arms connected to the underframe of the harrow and bearing the roller at each of their ends, characterised in that these two arms bear a crossbar (8) located above the roller, the underframe (10) of the seeder (B) resting on this crossbar with the interposition of one or more elastic devices (26).

5. An agricultural implement according to Claim 2, in which the three connecting-rods (16, 17, 18) for coupling the underframe (10) of the seeder (B) to the underframe (2) of the harrow (A) are caused to rotate by means of a (hydraulic, electric, pneumatic or mechanical) piston-cylinder unit (27).

6. An agricultural implement according to Claim 5, in which the piston-cylinder unit (27) which has to cause the three coupling connecting-rods of the underframe (10) of the seeder (B) to pivot upwards and forwards is interposed between the coupler head (19) and the underframe (10) of the seeder.

7. An agricultural implement according to Claim 5, in which the three connecting-rods (16, 17, 18) for coupling the underframe (10) of the seeder (B) to the coupler head (1) of the harrow (A) are articulated directly to said coupler head (1) without the interposition of a coupling head (19) belonging to the seeder.

## Patentansprüche

1. Landwirtschaftliches Mehrzweckgerät, bestehend aus der Verbindung einer Egge (A), die einen einen Kupplungskopf (1) tragenden Rahmen (2), eine oder mehrere Reihen von Bodenbearbeitungsorganen sowie Trägermittel für eine Walze (3) umfaßt, mit einer Sämaschine (B), die derart am Rahmen der Egge (A) gelenkig angebracht ist, daß sie angehoben werden kann, **dadurch gekennzeichnet**, daß der Rahmen (10) der Sämaschine (B) in der Arbeitsposition von den Trägermitteln für die Walze (3) derart getragen wird, daß er sich über dieser befindet, wobei die Sämaschine (B) keine Räder zu ihrer Abstützung auf dem Boden besitzt, sowie dadurch, daß die Vorrichtung derart ausgelegt ist, daß die Sämaschine (B) bei ihrem Anheben zur Vorderseite der Egge (A) Ober deren Arbeitsorgane gebracht werden kann.

2. Landwirtschaftliches Gerät gemäß Anspruch 1, bei dem die Sämaschine (B) einen Rahmen (10), der einen Saatkasten (11) für die Samenkörner trägt, einen Mechanismus zur Verteilung der Samenkörner (12), ein Antriebsorgan (13) für diesen Mechanismus sowie drei Kupplungsstangen (16, 17, 18) umfaßt, dadurch gekennzeichnet, daß die drei Kupplungsstangen (16,17,18) des Rahmens (10) der Sämaschine (B) derart angebracht sind, daß sie nach oben und nach vorne verschwenken können.

3. Landwirtschaftliches Gerät gemäß Anspruch 2, bei dem der Rahmen (10) der Samaschine (B) in Arbeitsposition über einen oder mehrere elastische Dämpfer (26) auf den Trägermitteln für die Walze (3) ruht.

4. Landwirtschaftliches Gerät gemäß Anspruch 2, bei dem die Trägermittel für die Walze (3) aus zwei Armen bestehen, die mit dem Rahmen der Egge verbunden sind und die Walze an jedem deren Enden tragen, dadurch gekennzeichnet, daß diese beiden Arme eine Traverse (8) tragen, die sich oberhalb der Walze befindet, wobei der Rahmen (10) der Sämaschine (B) unter Zwischenschaltung einer oder mehrerer elastischer Einrichtungen (26) auf dieser Traverse ruht.

5. Landwirtschaftliches Gerät gemäß Anspruch 2, bei dem die drei Kupplungsstangen (16,17, 18) vom Rahmen (10) der Sämaschine (B) zum Rahmen (2) der Egge (A) mit Hilfe eines (hydraulischen, elektrischen, pneumatischen oder mechanischen) Zylinders (27) in Rotation versetzt werden.

6. Landwirtschaftliches Gerät gemäß Anspruch 5, bei dem der Zylinder (27), der die drei Kupplungsstangen des Rahmens (10) der Sämaschine (B) nach oben und nach vorne verschwenken muß, zwischen den Kupplungskopf (19) und den Rahmen (10) der Sämaschine geschaltet ist.

7. Landwirtschaftliches Gerät gemaß Anspruch 5, bei dem die drei Kupplungsstangen (16, 17, 18) vom Rahmen (10) der Sämaschine (B) zum Kupplungskopf (1) der Egge (A) direkt an diesem Kupplungskopf (1) ohne Zwischenschaltung eines eigenen Kupplungskopfs (19) der Sämaschine gelenkig gelagert sind.
